# EUROPEAN PATENT SPECIFICATION

(11) **EP 3 045 334 B1**
(45) Date of publication and mention of the grant of the patent: **01.08.2018**
(21) Application number: 15151560.8
(22) Date of filing: 16.01.2015
(51) Int. Cl.: B60K 1/00, B60K 5/10, B60T 1/10, B60W 30/18

(54) **Conversion kit for converting a gasoline motor driven karting vehicle to an electric motor driven karting vehicle**
Umbausatz zum Umwandeln eines benzinmotorgetriebenen Kartfahrzeugs in ein elektromotorgetriebenes Kartfahrzeug
Kit de conversion pour convertir un véhicule de type karting entraîné par un moteur à essence en un même véhicule entraîné par un moteur électrique

(43) Date of publication of application: 20.07.2016
(73) Proprietor: Moens, Alex, 8500 Kortrijk (BE)
(72) Inventor: Moens, Alex, 8500 Kortrijk (BE)
(74) Representative: BiiP cvba

(56) References cited:
- WO-A1-2010/071539
- DE-A1-102009 036 348
- MX-A- 2011 000 953
- US-A- 3 902 565
- US-A1- 2011 192 661
- US-A1- 2014 262 567
- US-B1- 7 922 265
- US-B2- 8 653 960

## Description

### FIELD OF THE INVENTION

The present invention relates to a conversion kit, a kit of parts for preparing a conversion kit, and a method for converting a gasoline motor driven karting vehicle to an electric motor driven karting vehicle.

In addition, the present invention relates to an automated safety system, or an automated educative or entertainment system for a recreational vehicle circuit, a karting circuit, or a racing circuit.

### BACKGROUND OF THE INVENTION

As commonly known, combustion motor driven vehicles produce high amounts of carbon dioxide and suffer from microscopic dust emission.

In particular in case of karting vehicles that are often used on indoor circuits such as karts, pocket bikes and the like, air pollution by exhaust of combustion gases constitute a major hurdle which can only be remedied by installing expensive and energy consuming ventilation and exhaust extraction systems. In addition, the noise levels of gasoline driven karting vehicles are very high.

Therefore, electric motor driven karts as described in US2013025950 have been developed to address the exhaust and noise issues. However, because of the high costs involved in replacing gasoline motor driven karts with originally built electric motor driven karts, there remains a need for converting used gasoline motor driven karts into electric driven karts. US 3 902 565 A , which comprises the features mentioned in the preamble of claim 1, discloses a conversion kit for converting a vehicle from gasoline motor drive to electric motor drive.

For example, Golden Motor Technology Co., Ltd. Offers conversion kits (see http://goldenmotorcz.en.made-in-china.com/product/MXQmqbeJJaVu/China-CE-5kw-48V-Electric-Car-Conversion-Kit.html).

A general problem with conventional conversion kits however is that conversion requires modifying the vehicle frame in order to install the electric motor, the battery, etc.

Another problem is that, whereas an accelerator pedal or throttle lever of a gasoline motor driven karting vehicle is mechanically controlling the gasoline injection into the combustion motor, an electric motor is electronically controlled by increasing or decreasing the electrical energy input, which makes both systems technically incompatible. Conventional conversion kits attempt to solve the problem by removing the original accelerator pedal or throttle lever and its mechanical linkage and replacing it by an electronic pedal or throttle lever and corresponding wiring, which obviously leads to more complex and time consuming installation. Another known alternative is a potentiometer inserted into the steering shaft as described in http://ttjcrew.com/2009/11/19/electric-go-kart/.

Considering the above, a first object of the present invention is to provide a conversion kit, a kit of parts for preparing a conversion kit, and a method for converting gasoline motor driven karting vehicles into electric driven karting vehicles overcoming the above mentioned.

Another object of the present invention is to provide converted karting vehicles having increased performance time before recharging is required compared to conventionally converted or originally built electric driven karting vehicles.

It is also an object of the present invention to provide converted karting vehicles of which the performance during karting can be accurately monitored.

As a further object, the present invention offers gasoline motor driven karting vehicles the ability to participate in an automated safety, or educative or entertainment system for a recreational vehicle circuit, a karting circuit, or a racing circuit.

Further, it is also an object of the present invention to provide a system with improved safety, educational or entertaining functionalities for a recreational vehicle circuit, a karting circuit, or a racing circuit.

### SUMMARY OF THE INVENTION

The present invention is directed to a conversion kit according to claim 1 for converting a karting vehicle to an electric motor driven karting vehicle. In addition, the present invention is directed to an automated safety control system for a recreational vehicle circuit, a karting circuit, or a racing circuit, comprising such conversion kits.

Further, the present invention is directed to an automated educative or game control system for a recreational vehicle circuit, a karting circuit, or a racing circuit, comprising such conversion kits.

In addition, the present invention is also directed to a method for converting a gasoline motor driven karting vehicle to an electric motor driven karting vehicle, according to claim 12.

### BRIEF DESCRIPTION OF THE DRAWINGS

FIG 1 illustrates a motor frame (1) with a mounted electric motor (2) and motor control unit (3) as used in an embodiment of a conversion unit in accordance with the present invention.
FIG 2 illustrates a lever mechanism (4) having a first end (5) engaging with the transducer (6) an a second end (7) suitable for connected to the accelerator cable or to the throttle lever cable, as used in an embodiment of a conversion unit in accordance with the present invention.

### DESCRIPTION OF THE INVENTION

As a first embodiment of the present invention, a conversion kit for converting a karting vehicle from a gasoline motor driven karting vehicle comprising a gasoline motor fixed to the karting vehicle by means of gasoline motor fixing means, to an electric motor driven karting vehicle comprising an electric motor, said conversion kit includes:
(a) a motor frame,
(b) an electric motor mounted on the motor frame,
(c) a motor control unit mounted on the motor frame,
(d) a transducer for delivering an electric signal to the electric motor control unit, said electric signal being proportional to an accelerator pedal or throttle lever movement, said transducer being connectable to the motor control unit,
(e) a battery assembly for powering the electric motor,
(f) a transmission adapter for coupling the electric motor to the vehicle's transmission,
   characterized in that,
(g) the motor frame comprises frame fixing means adapted for being mounted on fixing the motor frame to the karting vehicle after removal of the gasoline motor, using at least part of the gasoline motor fixing means, and
(h) the transducer comprises acceleration coupling means for coupling an accelerator pedal or a throttle lever of the karting vehicle to the transducer.

In other words, the motor frame fixing means are adapted for being mounted on the mounting structure of the gasoline motor of a gasoline motor driven karting vehicle to be converted, and the transducer comprises acceleration coupling means for coupling with the (original) accelerator pedal or throttle lever of the gasoline motor driven karting vehicle to be converted. This offers a conversion kit which can be mounted without having to modify the karting vehicle frame and without having to remove the original accelerator or throttle lever. Obviously this makes converting noisy and environmentally unfriendly gasoline motor driven karting vehicles less complex and less time consuming compared to using conventional conversion kits.

In an embodiment in accordance with the present invention, the transmission adapter is suitable for driving the belt or chain drive of the gasoline motor driven karting vehicle to be converted. In a particular embodiment the transmission adapter yields a gear ratio identical to the gear ratio yielded by the gasoline motor, but the gear ratio may be also adapted in function of consumer needs. The transmission adapter may be a pulley or gear fitting the original belt or chain drive.

The transducer comprises acceleration coupling means for coupling the (original) accelerator pedal or throttle lever of the gasoline motor driven karting vehicle to be converted to the transducer for delivering an electric signal to the electric motor control unit. This means that any type of transducer may be used which may be directly or indirectly engaged by the vehicle's original accelerator or throttle lever. For example the transducer may be suitable for being mounted in direct contact with the accelerator pedal or throttle lever, e.g. underneath the original accelerator pedal. However, the transducer may be also mounted or adapted to be mounted inside the motor housing.

In an embodiment according to the present invention, the acceleration coupling means are suitable for coupling the transducer to an accelerator cable or to a throttle lever cable, said acceleration coupling means being preferably mechanical. The transducer is mounted or adapted to be mounted inside the motor housing and to be connected to a vehicle's accelerator or throttle lever cable. The benefit thereof is that, besides the accelerator or throttle lever, also the original mechanical linkage from the accelerator or throttle lever can be reused.

Such mechanical acceleration coupling means may be any type of system suitable for transmitting the accelerator or throttle lever cable movement to the transducer. In a particular embodiment however, the mechanical acceleration coupling means comprises a lever mechanism having a first end engaging with the transducer an a second end suitable for connected to the accelerator cable or to the throttle lever cable. The benefit of using a lever mechanism is that it converts a pulling force on the cable into a pushing force on the transducer in a very easy and straightforward way.

The transducer used in any conversion kit in accordance with the present invention may be any type suitable for delivering an electric signal to the electric motor control unit, the electric signal being proportional to the accelerator or throttle lever movement. Preferably the transducer is a potentiometer, a hall-effect sensor or a solenoid. Since most common motor control units support input by a potentiometer, a potentiometer may be the preferred choice.

In an embodiment of a conversion kit according to the present invention, the electric motor and the motor control unit are suitable for regenerative braking. In regeneration mode the motor serves as a generator and its electrical output is supplied to the battery assembly providing the braking effect. An important benefit of using an electric motor and motor control unit supporting regenerative braking is that in contradiction to a system as described in WO2013192142 a separate alternator for regenerating power is not required. Obviously, power regeneration results in longer driving time before battery recharging is required. Another benefit is that because part of the braking effect is obtained by energy regeneration, abrasion of the brakes decreases resulting in higher life time.

In another embodiment, a conversion kit in accordance with the present invention further comprises a pressure sensor to be built into a vehicle's braking circuit and to be connected with the motor control unit, said motor control unit being tuned such that the electric motor goes in regenerative braking mode upon detecting a brake pressure value above a threshold value. So the motor goes in regeneration mode only if it is effectively the driver's intention to decrease speed by braking. In addition, the brake system may be tuned such that, in case the threshold value is only slightly exceeded, the vehicle decreases speed only or almost only by energy regeneration.

Then upon increasing brake pressure, the brake blocks will exert a proportionally increasing force on the brake discs. It is clear that the combination of a brake pressure sensor with an electric motor and controller supporting energy generation and with a properly tuned brake system may results in optimal energy regeneration and minimum brake blocks and disc abrasion. Another important benefit is a decreased risk for wheel locking up.

The battery assembly may comprise a battery pack and a cell balancing system. Each battery cell has a small difference in internal resistivity due to fabrication tolerance. Especially in applications requiring high discharge current, unbalanced voltages between the cells during charging will arise. When building a multi-cells battery pack (in series or in parallel), unbalanced voltage will reduce battery pack's energy power and life cycle significantly. Therefore, adding a balance module to each cell before making a battery pack will maintain battery power and increase cycle life time. Preferably a LiFeP04 pack may be used. Lithium-Iron-Phosphate batteries (LiFeP04) that have comparable voltage and Ahr ratings to lead acid batteries weigh less than 50% of a lead acid battery, have a longer life, and re-charge more quickly. By using LiFeP04 batteries, a closer ratio of run time to charge time can be achieved for a commercial operation. Multiple cells can be incorporated into specialized packages (battery packs). The battery packs may include hand holds or handles for ease in handling. Lightweight batteries other than LiFeP04 batteries may also be used, including, but not limited to, other forms of Lithium-Ion batteries.

The battery assembly may further comprise a battery control unit in communication with the electric motor control unit. A benefit thereof is that the electric motor control unit can keep track of remaining battery power and could for example reduce the power fed to the electric motor in order to have enough energy left for returning to the pit lane.

Further, the motor control unit may be adapted for receiving remote control commands. In that case the motor control unit is equipped with a motor remote control receiver for receiving dedicated signals from a remote control unit, the latter optionally being part of a central karting circuit control system. Such karting circuit control system may be a central safety control system or a central game control system. By doing so, a gasoline motor driven karting vehicle may obtain the ability to participate in a central safety system or gaming system for a recreational vehicle circuit, a karting circuit, a racing circuit, and the like. For example, motor power may be reduced automatically in case an incident happened on the circuit. Motor power may be automatically reduced in case small children drive the vehicles. Or motor power may be automatically (probably periodically) increased as a reward or bonus in an educative and/or entertainment game.

Therefore, the present invention also provides an automated safety control system for a recreational vehicle circuit, a karting circuit, or a racing circuit comprising the above described conversion kits.

In addition, the present invention also provides an automated educative or game control system for a recreational vehicle circuit, a karting circuit, or a racing circuit comprising the above conversion kits. Such system may offer the participants a much richer experience than racing, complex game formats, increased involvement from public watching the game.

In an additional embodiment, which is not part of the present invention, a kit of parts for preparing a conversion kit as described above is provided, said kit of parts comprising:
(i) an electric motor,
(j) a motor control unit,
(k) a transducer for delivering an electric signal to the electric motor control unit, said electric signal being proportional to an accelerator pedal or throttle lever movement, said transducer being connected to the motor control unit,
(I) a battery assembly for powering the electric motor,
(m) a transmission adapter for coupling the electric motor to the vehicle's transmission,
(n) a motor frame comprising means for supporting the electric motor and the control unit,
characterized in that:
(o) the motor frame comprises frame fixing means adapted for fixing the motor frame to the karting vehicle after removal of the gasoline motor, using at least part of the gasoline motor fixing means, and
(p) the transducer comprises acceleration coupling means for coupling an accelerator pedal or a throttle lever of karting vehicle to the transducer.

In another addition embodiment the present invention, provides a method for converting a gasoline motor driven karting vehicle to an electric motor driven karting vehicle, said method comprising the following steps:
(a) Providing a karting vehicle comprising a gasoline motor fixed to the karting vehicle by means of gasoline fixing means, and comprising an accelerator pedal or a throttle lever coupled to said gasoline motor,
(b) Uncoupling the accelerator pedal or a throttle lever from the gasoline motor,
(c) Removing the gasoline motor from the karting vehicle by uncoupling the gasoline motor fixing means,
(d) Mounting a conversion kit according to any of claims 1 to 10 onto the karting vehicle by coupling the frame fixing means to at least part of the gasoline motor fixing means of the karting vehicle,
(e) Coupling the transducer to the accelerator pedal or throttle lever of the karting vehicle, by means of the acceleration coupling means.

It is clear for a skilled person that karting vehicles may include karts, pocket bikes, quads, trikes, crossers... or any type of recreational vehicle.

It should also be obvious that a conversion kit, or a kit of parts for preparing a conversion kit is also applicable for tools, for example gasoline gardening tools such as a lawn mower, chain saw, etc

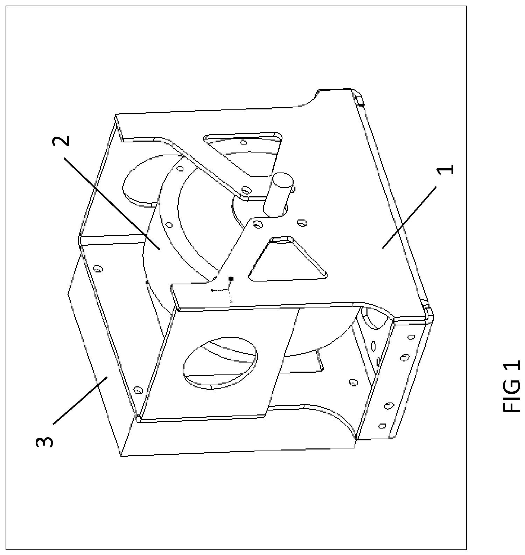

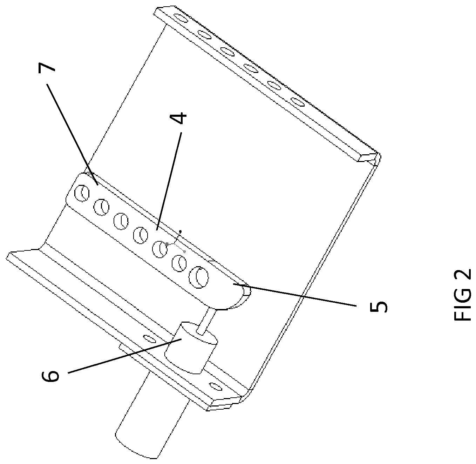

As an example, but not part of the invention, a kit of parts for preparing a conversion kit in accordance with the present invention may comprise:
- a motor frame as illustrated in FIG 1
- an axial gap DC brushed motor suitable for traction and industrial applications, preferably with lightweight design, simple electronic control, interchangeable shaft, and speed proportional to voltage.
- a motor controller unit for DC or AC motors in two voltage ranges (24-48V or 72-80V) with continuous currents of up to 260, field programmable using a hand-held programmer, Input/output data via CANbus, supporting regenerative braking
- Conductive polymer potentiometer with 10mm linear effective travel, standard spindle is 3mm diameter with a length of 29mm from fixing face., but other lengths area available upon request
- A lever system as shown in FIG 2 for connected the accelerator cable to the linear potentiometer
- LiFeP04 battery pack and Balance Module for (3.2V) LiFeP04 Battery Pack with selectable balancing current
- transmission adapter for coupling the electric motor to the vehicle's transmission
- optionally a highly versatile and configurable vehicle display which receives information via CANbus and displays it on the backlit dot-matrix display. This display may show motor parameters or even data related to an educational or entertainment game provided by the game processor of a game control system.

## Claims

1. A conversion kit for converting a karting vehicle from a gasoline motor driven karting vehicle to an electric motor driven karting vehicle, said conversion kit includes:
(a) a motor frame (1),
(b) an electric motor (2) mounted on the motor frame (2),
(c) a motor control unit (3) mounted on the motor frame (1),
(d) a transducer (6) for delivering an electric signal to the electric motor control unit (3), said electric signal being proportional to an accelerator pedal or throttle lever movement, said transducer (6) being connectable to the motor control unit (3),
(e) a battery assembly for powering the electric motor,
(f) a transmission adapter for coupling the electric motor (2) to the vehicle's transmission,
(g) the motor frame (1) comprises frame fixing means adapted fixing the motor frame (1) to the karting vehicle after removal of the gasoline motor, using at least part of the gasoline motor fixing means, and
(h) the transducer (6) comprises acceleration coupling means (4) for coupling an accelerator pedal or a throttle lever of the karting vehicle to the transducer, **characterized in that** the transducer is mounted or adapted to be mounted inside the motor housing and to be connected to a vehicle's accelerator or throttle lever cable.

2. A conversion kit according to claim 1, wherein the acceleration coupling means (4) are mechanical.

3. A conversion kit according to claim 2, wherein the mechanical acceleration coupling means (4) comprises a lever mechanism having a first end (5) engaging with the transducer (6) an a second end (7) to be connected to the accelerator cable or to the throttle lever cable.

4. A conversion kit according to any of the preceding claims, wherein the transducer (6) is a potentiometer, a hall-effect sensor or a solenoid.

5. A conversion kit according to any of the preceding claims wherein the electric motor (2) and the motor control unit (3) are suitable for regenerative braking.

6. A conversion kit according to claim 5, further comprising a pressure sensor to be built into the vehicle's braking circuit and to be connected with the motor control unit (3), said motor control unit (3) being tuned such that the electric motor (2) goes in regenerative braking mode upon detecting a brake pressure value above a threshold value.

7. A conversion kit according to any of the preceding claims, wherein the motor control unit (3) it is adapted for receiving remote control commands.

8. A conversion kit according to any of the preceding claims, wherein the battery assembly comprises a battery pack and a cell balancing system.

9. A conversion kit according to any of the preceding claims, wherein the battery assembly comprises a battery control unit in communication with the electric motor control unit.

10. An automated safety control system for a recreational vehicle circuit, a karting circuit, or a racing circuit comprising a conversion kit according to any of the preceding claims.

11. An automated educative or game control system for a recreational vehicle circuit, a karting circuit, or a racing circuit comprising conversion kits according to any of the preceding claims.

12. Method for converting a gasoline motor driven karting vehicle to an electric motor driven karting vehicle, said method comprising the following steps:
(a) Providing a karting vehicle comprising a gasoline motor fixed to the karting vehicle by means of gasoline fixing means, and comprising an accelerator pedal or a throttle lever coupled to said gasoline motor,
(b) Uncoupling the accelerator pedal or a throttle lever from the gasoline motor,
(c) Removing the gasoline motor from the karting vehicle by uncoupling the gasoline motor fixing means,
(d) Mounting a conversion kit according to any of claims 1 to 9 onto the karting vehicle by coupling the frame fixing means to at least part of the gasoline motor fixing means of the karting vehicle,
(e) Coupling the transducer (6) to the accelerator pedal or throttle lever of the karting vehicle, by means of the acceleration coupling means (4).

## Patentansprüche

1. Umbausatz zum Umwandeln eines Kartfahrzeugs von einem mit einem Benzinmotor angetriebenen Kartfahrzeug zu einem mit einem Elektromotor angetriebenen Kartfahrzeug, wobei der Umbausatz umfasst:
(a) einen Motorrahmen (1),
(b) einen Elektromotor (2), der auf dem Motorrahmen (2) montiert ist,
(c) eine Motorsteuereinheit (3), die auf dem Motorrahmen (1) montiert ist,
(d) einen Wandler (6) zum Übertragen eines elektrischen Signals zur Motorsteuereinheit (3),
wobei das elektrische Signal proportional zu einer Bewegung eines Fahrpedals oder Gashebels ist, wobei der Wandler (6) mit der Motorsteuereinheit (3) verbindbar ist,
(e) eine Batteriebaugruppe zur Energieversorgung des Elektromotors,
(f) einen Getriebeadapter zum Koppeln des Elektromotors (2) mit dem Getriebe des Fahrzeugs,
(g) wobei der Motorrahmen (1) Rahmenbefestigungsmittel umfasst, die so angepasst sind, dass sie nach dem Entfernen des Benzinmotors den Motorrahmen (1) am Kartfahrzeug befestigen, wobei die Benzinmotorbefestigungsmittel wenigstens teilweise verwendet werden, und
(h) der Wandler (6) Fahrkopplungsmittel (4) zum Koppeln eines Fahrpedals oder eines Gashebels des Kartfahrzeugs mit dem Wandler umfasst, **dadurch gekennzeichnet, dass** der Wandler so montiert oder angepasst ist, dass er innerhalb des Motorgehäuses montiert ist und mit einem Fahr- oder Gashebelkabel des Fahrzeugs zu verbinden ist.

2. Umbausatz nach Anspruch 1, wobei die Fahrkopplungsmittel (4) mechanisch sind.

3. Umbausatz nach Anspruch 2, wobei das mechanische Fahrkopplungsmittel (4) einen Hebelmechanismus mit einem ersten, am Wandler (6) angreifenden Ende (5) und einem zweiten, mit dem Fahrkabel oder dem Gashebelkabel zu verbindenden Ende (7) umfasst.

4. Umbausatz nach einem der vorhergehenden Ansprüche, wobei der Wandler (6) ein Potentiometer, ein Hall-Effekt-Sensor oder ein Magnetventil ist.

5. Umbausatz nach einem der vorhergehenden Ansprüche, wobei der Elektromotor (2) und die Motorsteuereinheit (3) für ein regeneratives Bremsen geeignet sind.

6. Umbausaz nach Anspruch 5, weiterhin umfassend einen Drucksensor, der in den Bremskreislauf des Fahrzeugs einzubauen ist und mit der Motorsteuereinheit (3) zu verbinden ist, wobei die Motorsteuereinheit (3) so abgestimmt ist, dass der Elektromotor (2) beim Erfassen eines Bremsdruckwertes oberhalb eines Schwellenwertes in den regenerativen Bremsmodus übergeht.

7. Umbausatz nach einem der vorhergehenden Ansprüche, wobei die Motorsteuereinheit (3) so angepasst ist, dass sie Fernsteuerungsbefehle empfängt.

8. Umbausatz nach einem der vorhergehenden Ansprüche, wobei die Batteriebaugruppe ein Akkumulatorpaket und ein Zellausgleichssystem umfasst.

9. Umbausatz nach einem der vorhergehenden Ansprüche, wobei die Batteriebaugruppe eine Batteriesteuereinheit in Kommunikation mit der Elektromotorsteuereinheit umfasst.

10. Automatisiertes Sicherheitssteuersystem für eine Bahn für Freizeitfahrzeuge, eine Kartbahn oder eine Rennstrecke, umfassend den Umbausatz nach einem der vorhergehenden Ansprüche.

11. Automatisiertes Schulungs- oder Spielsteuerungssystem für eine Bahn für Freizeitfahrzeuge, eine Kartbahn oder eine Rennstrecke, umfassend Umbausätze nach einem der vorhergehenden Ansprüche.

12. Verfahren zum Umwandeln eines mit einem Benzinmotor angetriebenen Kartfahrzeugs zu einem mit einem Elektromotor angetriebenen Kartfahrzeug, wobei das Verfahren die folgenden Schritte umfasst:
(a) Bereitstellen eines Kartfahrzeugs, das einen Benzinmotor umfasst, der mittels Benzinmotorbefestigungsmitteln am Kartfahrzeug befestigt ist und ein Fahrpedal oder einen Gashebel umfasst, das bzw. der mit dem Benzinmotor gekoppelt ist,
(b) Entkoppeln des Fahrpedals oder Gashebels vom Benzinmotor,
(c) Entfernen des Benzinmotors aus dem Kartfahrzeug, indem die Benzinmotorbefestigungsmittel entkoppelt werden,
(d) Montieren eines Umbausatzes nach einem der Ansprüche 1 bis 9 auf dem Kartfahrzeug, indem die Rahmenbefestigungsmittel wenigstens mit einem Teil der Benzinmotorbefestigungsmittel des Kartfahrzeugs gekoppelt werden,
(e) Koppeln des Wandlers (6) mit dem Fahrpedal oder Gashebel des Kartfahrzeugs mittels des Fahrkopplungsmittel (4).

## Revendications

1. Kit de conversion pour convertir un véhicule de type karting d'un véhicule de type karting entraîné par un moteur à essence en un véhicule de type karting entraîné par un moteur électrique, ledit kit de conversion inclut :
(a) un cadre de moteur (1),
(b) un moteur électrique (2) monté sur le cadre de moteur (2),
(c) une unité de commande de moteur (3) montée sur le cadre de moteur (1),
(d) un transducteur (6) pour délivrer un signal électrique à l'unité de commande de moteur électrique (3),
ledit signal électrique étant proportionnel à une pédale d'accélérateur ou mouvement de levier de papillon, ledit transducteur (6) pouvant être raccordé à l'unité de commande de moteur (3),
(e) un ensemble de batterie pour alimenter le moteur électrique,
(f) un adaptateur de transmission pour le couplage du moteur électrique (2) à la transmission de véhicule,
(g) le cadre de moteur (1) comprend un moyen de fixation de cadre adapté pour fixer le cadre de moteur (1) au véhicule de type karting après le retrait du moteur à essence, en utilisant au moins une partie du moyen de fixation de moteur à essence, et
(h) le transducteur (6) comprend des moyens de couplage d'accélération (4) pour le couplage d'une pédale d'accélérateur ou d'un levier de papillon du véhicule de type karting au transducteur, **caractérisé en ce que** le transducteur est monté ou adapté pour être monté dans le boîtier de moteur et pour être raccordé à un câble d'accélérateur de véhicule ou de levier de papillon.

2. Kit de conversion selon la revendication 1, dans lequel les moyens de couplage d'accélération (4) sont mécaniques.

3. Kit de conversion selon la revendication 2, dans lequel le moyen de couplage d'accélération mécanique (4) comprend un mécanisme de levier présentant une première extrémité (5) venant en prise avec le transducteur (6) une seconde extrémité (7) à raccorder au câble d'accélérateur ou au câble de levier de papillon.

4. Kit de conversion selon l'une quelconque des revendications précédentes, dans lequel le transducteur (6) est un potentiomètre, un capteur à effet Hall ou un solénoïde.

5. Kit de conversion selon l'une quelconque des revendications précédentes, dans lequel le moteur électrique (2) et l'unité de commande de moteur (3) sont adaptés pour le freinage régénératif.

6. Kit de conversion selon la revendication 5, comprenant en outre un capteur de pression à intégrer dans le circuit de freinage de véhicule et à raccorder avec l'unité de commande de moteur (3), ladite unité de commande de moteur (3) étant accordée de sorte que le moteur électrique (2) vienne en mode de freinage régénératif suite à la détection d'une valeur de pression de frein supérieure à une valeur seuil.

7. Kit de conversion selon l'une quelconque des revendications précédentes, dans lequel l'unité de commande de moteur (3) est adaptée pour recevoir des ordres de commande distante.

8. Kit de conversion selon l'une quelconque des revendications précédentes, dans lequel l'ensemble de batterie comprend un bloc de batterie et un système d'équilibrage de pile.

9. Kit de conversion selon l'une quelconque des revendications précédentes, dans lequel l'ensemble de batterie comprend une unité de commande de batterie en communication avec l'unité de commande de moteur électrique.

10. Système de commande de sécurité automatisée pour un circuit de véhicule de loisirs, un circuit de karting ou un circuit de course comprenant un kit de conversion selon l'une quelconque des revendications précédentes.

11. Système de commande de jeu ou éducatif automatisé pour un circuit de véhicule de loisirs, un circuit de karting, ou un circuit de course comprenant des kits de conversion selon l'une quelconque des revendications précédentes.

12. Procédé de conversion d'un véhicule de type karting entraîné par un moteur à essence en un véhicule de type karting entraîné par un moteur électrique, ledit procédé comprenant les étapes suivantes :
(a) la fourniture d'un véhicule de type karting comprenant un moteur à essence fixé au véhicule de type karting à l'aide d'un moyen de fixation d'essence, et comprenant une pédale d'accélérateur ou un levier de papillon couplé audit moteur à essence,
(b) le découplage de la pédale d'accélérateur ou d'un levier de papillon du moteur à essence,
(c) le retrait du moteur à essence du véhicule de type karting par le découplage du moyen de fixation de moteur à essence,
(d) le montage d'un kit de conversion selon l'une quelconque des revendications 1 à 9 sur le véhicule de type karting par le couplage de moyen de fixation de cadre à au moins une partie du moyen de fixation de moteur à essence du véhicule de type karting,
(e) le couplage du transducteur (6) à la pédale d'accélérateur ou au levier de papillon du véhicule de type à karting à l'aide du moyen de couplage d'accélération (4).
